# EUROPÄISCHE PATENTANMELDUNG

(11) **EP 3 699 700 A1**
(43) Veröffentlichungstag der Anmeldung: **26.08.2020**
(21) Anmeldenummer: 19159109.8
(22) Anmeldetag: 25.02.2019
(51) Int. Cl.: G05B 19/042, G05B 15/02, G06Q 50/06, F17D 5/06, E03B 7/02, G06N 3/063

(54) **DRUCKREGELUNG IN EINEM VERSORGUNGSNETZ**

(71) Anmelder: Siemens Aktiengesellschaft, 80333 München (DE)
(72) Erfinder: Allmaras, Moritz, 81673 München (DE); Wehrstedt, Jan Christoph, 81829 München (DE); Wever, Utz, 81539 München (DE)

(57) **Zusammenfassung**

Die Erfindung betrifft ein Verfahren zur Druckregelung in einem Versorgungsnetz (10), wobei das Versorgungsnetz (10) dafür geeignet ist, Verbraucher mit einem Fluid zu versorgen. Das Versorgungsnetz (10) weist erste Sensoren (14) zur Messung der Durchflüsse und/oder der Drücke des Fluids an ersten Orten (141) im Versorgungsnetz (10) sowie eine Pumpe (16) zum Pumpen des Fluids oder ein Ventil zum Steuern eines Flusses des Fluids auf. Das Verfahren zur Druckregelung umfasst die folgenden Schritte: a) Messen der Durchflüsse und/oder Drücke des Fluids an den ersten Orten (141) im Versorgungsnetz (10) mittels der ersten Sensoren (14); b) Vorhersagen des Drucks an dem zweiten Ort (151) im Versorgungsnetz (10) mittels eines selbstlernenden Systems (SS) basierend auf den in Schritt a) gemessenen Durchflüssen bzw. Drücken, wobei das selbstlernende System (SS) dafür angelernt wurde, den Druck an einem vorgegebenen Ort im Versorgungsnetz (10) vorherzusagen; und c) Ansteuern der Pumpe (16) bzw. des Ventils basierend zumindest auch auf dem von dem angelernten System (SS) vorhergesagten Druck am zweiten Ort (151). Die Erfindung betrifft des Weiteren eine Vorrichtung (30) zur Druckregelung in einem Versorgungsnetz (10) und eine Anordnung umfassend ein Versorgungsnetz (10) und die erwähnte Vorrichtung (30).

## Beschreibung

Die Erfindung betrifft ein Verfahren zur Druckregelung in einem Versorgungsnetz. Beispielhafte Anwendungen sind die Druckregelung in einem Trink- oder Abwassernetz oder in einem Gas- oder Fernwärmeversorgungsnetz.

Obwohl die vorliegende Erfindung nachfolgend mit Bezug auf Wasserversorgungsnetze beschrieben wird, ist sie genauso auf andere Versorgungsnetze, beispielsweise Gasversorgungsnetze oder Fernwärmeversorgungsnetze, anwendbar.

Der in einem Wasserversorgungsnetz herrschende hydraulische Druck ist ein wichtiges Qualitätsmerkmal. Für industrielle Großverbraucher und Feuerhydranten garantiert ein hoher Druck, dass eine große Wassermenge in kurzer Zeit aus dem Versorgungsnetz entnommen werden kann. An den Hausanschlüssen erlaubt ein ausreichend hoher Wasserdruck komplette Gebäude bis zur obersten Etage ohne zusätzliche Pumpeinrichtungen zuverlässig mit Trinkwasser zu versorgen.

Auf der anderen Seite führt ein zu hoher Druck im Versorgungsnetz zu vorzeitiger Alterung und Versagen von Komponenten, beispielsweise durch Rohrleitungsbruch. Die dadurch verursachten Leckagen führen zu hohen Reparaturkosten, Wasserverlusten und in einigen Fällen zu weiteren Schäden an umliegenden Strukturen. Des Weiteren führt ein Überdruck zu einem erhöhten Wasserverlust durch Hintergrundleckagen. Solche Hintergrundleckagen sind in der Regel in jedem Wassernetz in gewissem Ausmaß vorhanden und haben einen kontinuierlichen Verlust von Trinkwasser zur Folge. Ein zu hoher Fließdruck erhöht außerdem die bei der Rohrströmung auftretenden Reibungsverluste. In Versorgungsnetzen, in denen der Druck durch Pumpen aufgebaut wird, führt eine Erhöhung des bereitgestellten Drucks unmittelbar zu einem erhöhten Energiebedarf der Pumpen.

Betreiber von Versorgungsnetzen stehen daher vor der Herausforderung, zwischen den genannten beiden entgegenlaufenden Anforderungen einen Kompromiss bezüglich des bereitgestellten hydraulischen Drucks in dem Versorgungsnetz zu finden. Diese Entscheidung wird zusätzlich dadurch erschwert, dass der im Betrieb herrschende Druck stark durch die Abnahmelast beeinflusst wird, die starken Schwankungen ausgesetzt sein und oft nicht zuverlässig gemessen oder vorhergesagt werden kann. Diese Abnahmeschwankungen sowie Schaltvorgänge von Pumpen und Ventilen können weiterhin zu kurzzeitigen Druckspitzen im Versorgungsnetz führen, die eine schädliche Wirkung auf Netzkomponenten haben können und häufig die Ursache von plötzlich auftretenden Leckagen darstellen.

In vielen Wasserversorgungsnetzen wird heutzutage durch Hochbehälter oder ständig laufende Pumpen gezielt ein kontinuierlich hoher Druck bereitgestellt. Die Auslegung der Netzkomponenten wird schon bei der Planung bewusst überdimensioniert. Der Überdruck im Versorgungsnetz wird an den Verbrauchsstellen durch Druckreduzierungseinrichtungen auf ein für die Verbraucher sinnvolles Maß reduziert. Die durch den langfristigen Betrieb mit hohem Druck vorstehend aufgeführten Nachteile werden vielfach in Kauf genommen.

Erst in der jüngeren Vergangenheit wurden unter dem Schlagwort "Pressure Management" Ansätze entwickelt, um den im Wasserverteilnetz herrschenden Druck gezielt an die Anforderungen der Verbraucher anzupassen und damit zu hohe Drücke samt den damit einhergehenden Nachteilen zu vermeiden. Zu den dabei entwickelten Techniken gehört die Unterteilung des Versorgungsnetzes in Druckzonen *(englisch: pressure management zones, PMZ),* in denen der Druck an den Zuflüssen durch gezielte Steuerung von Ventilen oder Pumpen auf ein Mindestmaß reduziert wird. Zur Auslegung der Drucksteuerung werden dabei Kenntnisse über die Netzstruktur, die topographischen Gegebenheiten der Druckzone sowie über Anzahl und Art der angeschlossenen Verbraucher herangezogen. Um auf die durch wechselnden Verbrauch verursachten dynamischen Druckschwankungen reagieren zu können, werden inzwischen auch online gemessene Druckwerte in der Zone für die Drucksteuerung verwendet.

Die europäische Patentanmeldung EP 3 120 201 offenbart ein Verfahren zur Druckregelung in einem Versorgungsnetz. Ein zentraler Bestandteil dieses Verfahrens ist das Erstellen eines Simulationsmodells des Versorgungsnetzes. Das Simulationsmodell simuliert Druck- und/oder Durchflussprofile in Abhängigkeit von Verbrauchsprofilen. Die die Druck- und/oder Durchflussprofile beschreibenden Daten werden anschließend reduziert. All dies kann "offline" erfolgen, also außerhalb des eigentlichen Betriebs, insbesondere vor Inbetriebnahme des Versorgungsnetzes. In einem "online" Teil des Verfahrens, also im Betrieb des Versorgungsnetzes, wird nun mittels zumindest eines ersten Sensors ein erster Druck- und/oder Durchflusswert an zumindest einer ersten Stelle in dem Versorgungsnetz gemessen. Um jedoch auch einen zweiten Druck- und/oder Durchflusswert an zumindest einer zweiten Stelle in dem Versorgungsnetz zu bestimmen, wird dieser aus den reduzierten Daten und unter Verwendung des zumindest einen ersten Druck- und/oder Durchflusswerts rekonstruiert. Ganz allgemein weisen die reduzierten Daten weniger Daten und/oder eine geringere Datenkomplexität als die (nicht-reduzierten) Daten auf. Die Verwendung der reduzierten Daten zur Bestimmung der zweiten Druck- und/oder Durchflusswerte hat den Vorteil, dass weniger Rechenleistung benötigt und entsprechend eine schnelle Ansteuerung der zumindest einen Pumpe oder des zumindest einen Ventils, insbesondere in Echtzeit, ermöglicht wird.

In manchen Fällen ist die Erstellung eines solchen Simulationsmodells jedoch relativ aufwändig, beispielsweise bei einem komplexen Verlauf der Rohrleitungen des Versorgungsnetzes, oder es liegen schier nicht genügend Informationen bezüglich der Topologie des Versorgungsnetzes und der mit dem Versorgungsnetz verbundenen Verbraucher vor. In anderen Fällen ist es zwar möglich, ein entsprechendes Simulationsmodell aufzustellen und die Daten zu reduzieren. Dennoch kann die Rekonstruktion des zweiten Druck- oder Durchflusswertes trotz der Reduktion der Daten aus dem Simulationsmodell länger als für die Ansteuerung der Pumpe und/oder des Ventils gewünscht dauern.

Vor diesem Hintergrund besteht eine Aufgabe der vorliegenden Erfindung darin, ein alternatives Konzept zur Druckregelung in einem Versorgungsnetz bereitzustellen, das insbesondere eine schnelle Ansteuerung der Pumpe und/oder des Ventils ermöglicht.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung und den Abbildungen.

Demgemäß wird ein Verfahren zur Druckregelung in einem Versorgungsnetz bereitgestellt. Das Versorgungsnetz ist dafür geeignet und dazu ausgelegt, Verbraucher mit einem Fluid zu versorgen. Das Versorgungsnetz weist erste Sensoren zur Messung der Durchflüsse und/oder der Drücke des Fluids an ersten Orten im Versorgungsnetz auf. Ferner weist das Versorgungswerk eine Pumpe zum Pumpen des Fluids oder ein Ventil zum Steuern eines Flusses des Fluids auf. Das Verfahren zur Druckregelung weist die folgenden Schritte auf:
a) Messen der Durchflüsse und/oder Drücke des Fluids an den ersten Orten im Versorgungsnetz mittels der ersten Sensoren,
b) Vorhersagen des Drucks an dem zweiten Ort im Versorgungsnetz mittels eines selbstlernenden Systems basierend auf den in Schritt a) gemessenen Durchflüssen bzw. Drücken, wobei das selbstlernende System dafür angelernt wurde, den Druck an einem vorgegebenen Ort im Versorgungsnetz vorherzusagen, und
c) Ansteuern der Pumpe bzw. des Ventils basierend zumindest auch auf dem von dem angelernten System vorhergesagten Druck am zweiten Ort.

Die Erfinder haben erkannt, dass sich für die Druckregelung in einem Versorgungsnetz ein selbstlernendes System in vorteilhafter Weise verwenden lässt. In einer ersten Phase wird das selbstlernende System angelernt, den Druck an einem vorgegebenen Ort im Versorgungsnetz vorhersagen zu können. Nach der Anlernphase wird das angelernte System während des Betriebs des Versorgungsnetzes verwendet. Hierfür sagt das angelernte System basierend auf während des Betriebs tatsächlich gemessenen Durchflüssen und/oder Drücken den Druck an einem bestimmten Ort im Versorgungsnetz voraus. Der Gedanke ist, dass der vorhergesagte Wert den tatsächlichen Druck korrekt angibt. Dank der Vorhersage des angelernten Systems ist also insbesondere keine Messung des Durchflusses und/oder Drucks am zweiten Ort notwendig, um den Druck am zweiten Ort zu kennen (vorausgesetzt, die Vorhersage des angelernten Systems ist korrekt).

Daraus ergeben sich mehrere Vorteile. Ein erster Vorteil besteht darin, dass es möglich ist, den Druck an Orten im Versorgungsnetz zu kennen, an denen kein Sensor platziert ist und für dessen Kenntnis keine Messung an besagtem Ort nötig ist. Es ist - wie noch im Detail später beschrieben werden wird - unter Umständen vorteilhaft, während des Anlernens des selbstlernenden Systems den Druck und/oder den Durchfluss an dem entsprechenden "zweiten" Ort zu messen. Auch hierfür gibt es jedoch Alternativen, falls der zweite Ort z.B. für eine direkte Messung schwer oder gar nicht zugänglich ist. In jedem Fall ist für die Druckregelegung an sich kein Sensor am zweiten Ort erforderlich, da mithilfe des angelernten Systems der Druck an der dortigen Stelle vorhergesagt wird.

Ein zweiter Vorteil des erfindungsgemäßen Verfahrens besteht darin, dass die Bestimmung des Drucks am zweiten Ort schnell erfolgen kann. Im Gegensatz beispielsweise zu einer analytischen oder modellbasierten Simulation des Versorgungsnetzes, die bereits bei einer wenig komplexen Topologie des Versorgungsnetzes und einer geringen Anzahl von Verbrauchern sehr schnell sehr rechenintensiv und damit zeitaufwändig wird, zeichnet sich ein angelerntes System unter anderem darin aus, dass es für eingegebene Eingangsdaten - hier die gemessenen Durchflüsse und/oder Drücke der ersten Sensoren - in der Regel sehr schnell die geforderte Ausgabe - hier den Druck an dem zweiten Ort - ausgibt. Somit liegt quasi "online" und ohne Zeitverzögerung nach Messung der Durchflüsse und/oder Drücke an den ersten Orten auch der Druck an dem zweiten Ort vor. Dies ist für ein Regelungsverfahren, wie das vorliegende Verfahren zur Regelung des Drucks in einem Versorgungsnetz, von nicht zu unterschätzender Relevanz.

Eine Vorhersage des Drucks ist in der Regel nur für denjenigen Ort möglich, für den das selbstlernende System auch trainiert wurde. Es ist allerdings möglich, das selbstlernende System für die Vorhersage des Drucks an mehreren Orten des Versorgungsnetzes zu trainieren. Die Anzahl an Messpunkten im Netz muss nicht zwangsläufig größer als die derjenigen Orte, deren Drücke vorhergesagt werden, sein, ist es in der Regel jedoch.

Das beschriebene Verfahren lässt sich allgemein auf jede Art von Versorgungsnetzen anwenden, in dem ein Druck eines Fluids zu regulieren ist. Unter einem Fluid wird jede Art von Flüssigkeit oder Gas verstanden. In dem Fall, dass es sich bei dem Fluid um Wasser handelt, ist das Versorgungsnetz insbesondere ein Trinkwasserversorgungs- oder Abwassernetz. In dem Fall, dass es sich bei dem Fluid beispielsweise um Erdgas handelt, ist das Versorgungsnetz insbesondere ein Gasversorgungsnetz. In dem Fall, dass es sich bei dem Versorgungsnetz um ein Fernwärmeversorgungsnetz handelt, ist das Überträgermedium, also das Fluid, meist Heißwasser, seltener auch Dampf.

Das Versorgungsnetz umfasst insbesondere eine Reihe von Rohren, die auch als Rohrleitungen oder nur als Leitungen bezeichnet werden. Die Rohre sind dafür da, das Fluid zu den Verbrauchern und gegebenenfalls wieder von ihnen weg zu leiten. Die Rohre sind also dafür ausgestaltet, von dem Fluid durchströmt zu werden.

Im Rahmen dieser Patentanmeldung wird unter dem Durchfluss an einem bestimmten Ort im Versorgungsnetz das Volumen des Fluids verstanden, das pro Zeitspanne durch den Querschnitt des Rohrs an dem entsprechenden Ort fließt. Der Querschnitt des Rohrs ist dabei durch dessen Innerdurchmesser festgelegt. Der Durchfluss wird auch als "Volumenstrom" oder "Durchflussrate" bezeichnet. Er hat die SI-Einheit m³/h. Mit dem Durchfluss ist im Rahmen dieser Patentanmeldung also ein Wert gemeint, der den Durchfluss charakterisiert und quantifiziert. Er kann folglich auch als "Durchflusswert" bezeichnet werden.

Der Durchfluss wird mittels Durchflussmessern gemessen. Ein Durchflussmesser weist in der Regel zwei Hauptkomponenten auf: der eigentliche Messaufnehmer, der als Durchflusssensor dient, und ein Auswerte- und Speiseteil, das auch als Transmitter oder Messumformer bezeichnet wird. Die Durchflussmesser werden im Rahmen dieser Patentanmeldung auch als "Sensor" bezeichnet.

In dem Fall, dass es sich bei dem Fluid im Versorgungsnetz um eine Flüssigkeit handelt, wird im Rahmen dieser Patentanmeldung unter dem Druck an einem bestimmten Ort im Versorgungsnetz der hydrodynamische Druck der Flüssigkeit an diesem Ort verstanden. Der hydrodynamische Druck ist nicht direkt messbar, lässt sich aber bei verlustfreier, horizontaler und stationärer Strömung aus der Messung der Differenz zwischen Totaldruck und statischem Druck bestimmen, beispielsweise mit einer Prandtlsonde, die eine Kombination aus einem Pitotrohr und einer statischen Drucksonde ist. Unter der Messung des Drucks des Fluids wird also im Fall einer Flüssigkeit insbesondere die indirekte Ermittlung des Drucks mittels einer Prandtlsonde verstanden.

In dem Fall, dass es sich bei dem Fluid im Versorgungsnetz um ein Gas oder Gasgemisch handelt, wird unter dem Druck die resultierende Kraft, die sich aus der Summe aller durch das Gas oder Gasgemisch wirkenden Kräfte in alle Richtungen ergibt, verstanden. Es ist also auch hier, analog zum hydrodynamischen Druck einer strömenden Flüssigkeit, der Druck des strömenden Gases in Strömungsrichtung relevant.

Ist der hydrodynamische Druck einer Flüssigkeit an einer Stelle bekannt, kann daraus die Geschwindigkeit der Flüssigkeit und daraus der Durchfluss berechnet werden. Umgekehrt kann aus einem bekannten Durchfluss an einem Ort der (relative) Druck an diesem Ort berechnet werden. Ist an einem Ort im Versorgungsnetz ferner der absolute Druck bekannt, kann in der Regel an jedem Ort im Versorgungsnetz der relative Druck in einen absoluten Druck umgerechnet werden.

Folglich kann das selbstlernende System sowohl mit gemessenen Durchflüssen an den ersten Orten als auch mit gemessen Drücken angelernt werden. Es jedoch vorteilhaft, wenn zumindest einer der ersten Sensoren tatsächlich einen absoluten Druck misst, da dann das selbstlernende System für den zweiten Ort auch einen absoluten Druck bestimmen kann. Ebenso ist es für den Betrieb des Versorgungsnetzes, also nach abgeschlossener Anlernphase des selbstlernen Systems, vorteilhaft, wenn zumindest einer der ersten Sensoren tatsächlich einen absoluten Druck misst, da auch (nur) dann das angelernte System für den zweiten Ort einen absoluten Druck vorhersagen kann.

Das selbstlernende System ist vorzugsweise als künstliches neuronales Netz ausgestaltet. Es weist künstliche Neuronen auf, die auf einer oder mehreren Schichten liegen und miteinander verbunden sind. Ein künstliches Neuron kann mehrere Eingaben verarbeiten und entsprechend über seine Aktivierung reagieren. Dazu werden die Eingaben gewichtet an eine Ausgabefunktion übergeben, welche die Neuronenaktivierung berechnet. Die Gewichtungen werden während der Anlernphase des selbstlernenden Systems kontinuierlich angepasst, bis die Ausgabe für eine bestimmte Eingabe möglichst genau mit einem Zielwert übereinstimmt.

Der Fachmann weiß, wie er ein geeignetes selbstlernendes System konfiguriert. Ein Beispiel für ein geeignetes Programmiergerüst ist TensorFlow. TensorFlow ist ein Programmiergerüst *(englisch: Framework)* zur datenstromorientierten Programmierung. Es wird z.B. aus Python-Programmen heraus benutzt und ist in Python und C++ implementiert. TensorFlow ist insbesondere für selbstlernende Systeme im Bereich des maschinellen Lernens populär. TensorFlow wurde ursprünglich vom Google-Brain-Team für den Google-internen Bedarf entwickelt und später unter der Apache-2.0-Open-Source-Lizenz veröffentlicht. In der Forschung und im Produktivbetrieb wird TensorFlow derzeit von verschiedenen Teams in kommerziellen Google-Produkten wie Spracherkennung, Gmail, Google Fotos und Google Suche verwendet. Auch der Kartendienst Maps wird durch Analyse der von Street View aufgenommenen Fotos, die mit Hilfe einer auf TensorFlow basierenden künstlichen Intelligenz analysiert werden, verbessert. Viele dieser Produkte nutzten früher die Vorgängersoftware DistBelief.

Das Anlernen des selbstlernenden Systems umfasst die folgenden Schritte:
In einem ersten Schritt i) werden an mehreren ersten Orten im Versorgungsnetz mittels erster Sensoren, wovon sich vorzugsweise an jedem ersten Ort (auch: Messort) sich einer befindet, der jeweilige Druck gemessen. Alternativ oder zusätzlich kann, wie oben beschrieben, auch der Durchfluss gemessen werden. Die Menge an gemessenen Drücken und/oder Durchflüssen an den verschiedenen ersten Orten bildet die Eingangsdaten für das selbstlernende System.

Im zweiten Schritt ii) bestimmt das selbstlernende System, also in der Regel das künstliche neuronale Netz, einen Ausgabewert basierend auf den in Schritt i) gesammelten Eingangsdaten. Bei dem Ausgabewert handelt es sich vorliegend konkret um den Druck an dem entsprechenden Ort, dem sogenannten zweiten Ort.

Im dritten Schritt iii) wird der von dem selbstlernenden System bestimmte Druck am zweiten Ort mit einem Zielwert verglichen und in einem vierten Schritt iv) das selbstlernende System unter Berücksichtigung des im vorigen Schritt angestellten Vergleichs angepasst. Das Lernverfahren, mit dem das selbstlernende System angelernt (oder: trainiert) wird, den Druck an einem bestimmten Ort korrekt vorherzusagen, ist als ein überwachtes Lernen *(englisch: supervised learning)* ausgestaltet. Beim überwachten Lernen wird dem künstlichen neuronalen Netz ein Eingangsmuster gegeben und die Ausgabe, die das neuronale Netz in seinem aktuellen Zustand produziert, mit dem Wert verglichen, den es eigentlich ausgeben soll. Durch Vergleich von Soll- und Istausgabe kann auf die vorzunehmenden Änderungen der Netzkonfiguration geschlossen werden. Bei einlagigen neuronalen Netzen kann die Delta-Regel (auch Perzeptron-Lernregel) angewendet werden. Mehrlagige neuronale Netze werden in der Regel mit Fehlerrückführung *(englisch: Backpropagation)* trainiert, was eine Verallgemeinerung der Delta-Regel darstellt.

In einer ersten Alternative basiert der Zielwert auf einem tatsächlich gemessenen Durchfluss und/oder Druck an demjenigen Ort, an dem das selbstlernende System den Druck vorherzusagen hat. Mit anderen Worten wird der von dem selbstlernenden System vorhergesagte Druck an dem zweiten Ort mit dem tatsächlich vorliegenden Druck, gemessen mit bzw. erhalten von einem entsprechenden Sensor, verglichen.

Diese Wahl des Zielwertes hat den Vorteil, dass der Zielwert schnell und präzise erhalten werden kann. Der Zielwert ist schnell erhältlich, da hierfür lediglich eine Messung des Durchflusses und/oder Drucks mit einem entsprechenden Sensor notwendig ist. Der mittels eines Sensors gemessene Zielwert ist, abhängig von der Güte und Qualität des Sensors, von hoher Präzision, da er direkt gemessen wird und somit etwaige Fehlerquellen minimal sind.

In einer zweiten Alternative wird der Zielwert nicht direkt gemessen, sondern mittels einer Simulation bestimmt. Der von dem selbstlernenden System vorhergesagte Druck an einem bestimmten Ort wird also mit einem mittels einer Simulation berechneten Druck an dem genannten Ort verglichen. Eine entscheidende Bedingung dafür, dass die Anlernphase erfolgreich ist und, vor allem, dass das angelernte System erfolgreich im Betrieb eingesetzt werden kann, ist die Qualität der Simulation. Da die Drücke, die die Simulation berechnet, als Zielwerte während des Trainings des selbstlernenden Systems verwendet werden, sollten die simulierten Drücke die Realität mit hoher Verlässlichkeit und Präzision wiedergeben. Mit anderen Worten wird darauf vertraut, dass die Simulation imstande ist, für die unterschiedlichsten Eingangsdaten den tatsächlichen Druckwert exakt zu berechnen.

Der Vorteil eines analytisch oder modellbasiert berechneten Zielwerts besteht darin, dass es während der Anlernphase keines Sensors und keiner Durchfluss- oder Druckmessung am entsprechenden Ort bedarf. Da es auch während des Betriebs des Versorgungsnetzes keiner Messung am entsprechenden (zweiten) Ort bedarf, kann also bei Simulierung des Zielwerts gänzlich auf eine Platzierung und Verwendung eines Sensors am zweiten Ort verzichtet werden.

Für den Fall, dass das Fluid Wasser ist, spricht man bei der Simulation auch von einer hydraulischen Simulation.

Im Allgemeinen ist die Simulation umso präziser, je zahlreicher und präziser ihr Input, das heißt ihre Eingangsdaten sind. Als Eingangsdaten für ein Versorgungsnetz kommen zum Beispiel die Topologie des Netzes infrage. Darunter versteht man die Anordnung und Beschaffenheit der Rohre einschließlich der Platzierung der Knoten, in dem sich drei oder mehr Rohre treffen. Weitere Eingangsdaten, die benötigt werden, sind die Orte, an denen mit dem Versorgungsnetz verbundene Verbraucher platziert sind, sowie die Art der Verbraucher. Weitere Eingangsdaten, die für eine präzise Simulation benötigt werden oder zumindest von großem Nutzen sind, sind Eigenschaften der Rohre wie beispielsweise deren Durchmesser oder deren Fließwiderstände. Schließlich sind irgendeine Art von Ersatzverbrauchsprofile für die verschiedenen Arten von Verbrauchern nötig. Da aus praktischen und datenschutzrechtlichen Gründen nicht die tatsächlichen Verbräuche der Verbraucher als Input genommen werden können, werden in der Regel repräsentative Verbräuche, sogenannte Ersatzverbrauchsprofile, der Simulation zugrunde gelegt. Es können beispielsweise je ein Ersatzverbrauchsprofil für ein Einfamilienhaus, Mehrfamilienhaus (mit Angabe der Wohneinheiten), Kleingewerbe, Krankenhaus, etc. verwendet werden.

Vorteilhafterweise werden die Zielwerte für die entsprechenden Eingangsdaten während der Anlernphase rasch zur Verfügung gestellt, da hierdurch die Dauer der Anlernphase minimiert werden kann. Hierfür kann es von Vorteil sein, die Eingangsdaten der Simulation vor der Bestimmung des Zielwerts zu reduzieren. Dies kann z.B. mittels einer Reihenentwicklung vorgenommen werden. Dem Fachmann sind entsprechende Techniken und Vorgehensweisen hierfür bekannt; lediglich beispielhaft wird in diesem Zusammenhang die Hauptkomponentenanalyse erwähnt.

Ändert sich die Topologie des Netzes in signifikantem Ausmaß, etwa durch signifikante Änderungen bei den Verbrauchern oder durch Änderungen bei den verlegten Rohren, muss das selbstlernende System neu angelernt werden. Das selbstlernende System kann aber in der Regel mit den Parametern, z.B. Gewichtungen, des bisherigen angelernten Systems vorbelegt werden, so dass gewöhnlicherweise nur eine relativ schnelle und unaufwändige Aktualisierung der Parameter, also eine verkürzte Anlernphase, notwendig ist.

Zurück zum Verfahren, das selbstlernende System anzulernen: Die genannten Schritte i) bis iv) werden so oft wiederholt, bis ein vorgegebenes Abbruchkriterium erreicht ist. Das Abbruchkriterium kann zum Beispiel darin bestehen, dass die Differenz zwischen dem von dem selbstlernenden System bestimmten Druck an einem bestimmten Ort und dem "wahren" Druck an diesem Ort - also dem Zielwert - kleiner als ein vorgegebener Schwellwert ist. Mit anderen Worten sollen beide Werte übereinstimmen oder sich nur unwesentlich unterscheiden. Um sicherzugehen, dass das selbstlernende System robust ist und über einen breiten Bereich von Eingangsdaten zuverlässig den wahren Durchfluss an dem entsprechenden Ort vorhersagt, kann das Abbruchkriterium ferner beinhalten, dass der Durchschnitt über eine vorbestimmte Anzahl an Iteration den vorgegebenen Schwellwert für die Differenz unterschreiten soll.

Ist das Abbruchkriterium erfüllt, wird das selbstlernende System nicht mehr weiter geändert. Im Fall eines künstlichen neuronalen Netzes werden z.B. die Gewichtungen an den künstlichen Neuronen nicht weiter angepasst, sondern festgehalten.

Nach der Anlernphase folgt der Betrieb des angelernten Systems, das auch als Nutzungsphase bezeichnet werden kann.

In einem ersten Schritt a) der Nutzungsphase werden die Durchflüsse und/oder Drücke des Fluids durch die Rohre an den ersten Orten im Versorgungsnetz gemessen. Dies hat im Wesentlichen an denselben Orten wie während der Anlernphase zu geschehen. Der Hintergrund dafür ist, dass ein angelerntes System für an den ersten Orten gemessene Durchflüsse bzw. Drücke angelernt wurde, so dass es auch in der Nutzungsphase nur mit Eingangsdaten von diesen ersten Orten zu verwenden ist. Plakativ gesprochen kann ein selbstlernendes Netz in der Regel nicht für das Erkennen von Äpfeln angelernt, aber zum Erkennen von Birnen genutzt werden.

Vorteilhafterweise werden die Durchflüsse und/oder Drücke während des Betriebs mittels derselben ersten Sensoren bestimmt, mittels derer das selbstlernende System in der Anlernphase mit Eingabedaten gefüttert wurde.

Im zweiten Schritt b) sagt das angelernte System auf Grundlage der konkret gemessenen Durchflüsse und/oder Drücke an den ersten Orten den Druck an dem zweiten Ort voraus. Wenn das selbstlernende System während der Anlernphase gründlich und umfassend angelernt wurde, besteht die nicht unberechtigte Erwartung, dass der vorausgesagte Druck für den zweiten Ort mit der Realität übereinstimmt.

Im dritten Schritt c) wird die Pumpe bzw. das Ventil basierend zumindest auch auf dem von dem angelernten System vorhergesagten Druck am zweiten Ort angesteuert. Mit der Kenntnis des Drucks am zweiten Ort kann also nun der Druck im Versorgungsnetz optimiert werden. Wie eingangs erwähnt, ist der Druck in herkömmlichen Versorgungsnetzen oftmals nicht optimal. In der Praxis wird er eher zu hoch gewählt und die eingangs erwähnten Nachteile - hoher Materialverschleiß, hohe Hintergrundleckagen, hoher Energieverbrauch der Pumpen, etc. - in Kauf genommen. Mit dem erfindungsgemäßen Verfahren kann der Druck effizienter geregelt werden. Im Idealfall werden also die Pumpe bzw. das Ventil genau so angesteuert, dass sie so viel Druck wie nötig, aber so wenig Druck wie möglich liefert. Dies ist mittels des vorgestellten Verfahrens realisierbar, ohne an allen, insbesondere ohne an schwer zugänglichen, Orten im Versorgungsnetz kontinuierlich den Druck messen zu müssen.

Vorteilhafterweise werden die ersten Sensoren im Versorgungsnetz so platziert, dass ihre Messwerte nicht miteinander korrelieren. Es ist zwar in der Regel an sich nicht schädlich, wenn die gemessenen Durchfluss- und/oder Druckwerte eines ersten Sensors mit den Durchfluss- und/oder Druckwerten eines anderen ersten Sensors im Versorgungsnetz korrelieren, aber die maximale Wirksamkeit entfalten die Sensoren, wenn ihre Messwerte nicht miteinander korrelieren. Eine allgemeingültige Regel für die Vermeidung einer Korrelation zweier benachbarter Sensoren existiert nicht. Vielmehr wählt der Fachmann vorteilhafterweise im konkreten Einzelfall die Platzierung der ersten Sensoren so aus, dass sie nicht miteinander korrelieren.

In einer Ausführungsform der Erfindung wird nicht nur ein einziger "zweiter Ort" im Versorgungsnetz bezüglich einer optimalen Druckregelung geregelt, sondern das Verfahren wird für mehrere zweite Orte durchgeführt. Hierfür ist es wiederum wichtig, dass das selbstlernende Netz bereits in der Anlernphase für die mehreren zweiten Orte trainiert wird - nur dann kann das angelernte Netz im Betrieb die jeweiligen Drücke an den mehreren zweiten Orten zuverlässig voraussagen.

In einer weiteren Ausführungsform weise das Versorgungsnetz *n* + *m* Sensoren auf, nämlich *n* erste Sensoren und *m* zweite Sensoren. In einem ersten Teil des Verfahrens wird das selbstlernende System mit den *n* ersten Sensoren so angelernt, dass es die Drücke an den *m* zweiten Sensoren korrekt vorhersagt. Anschließend wird in einem zweiten Teil des Verfahrens das selbstlernende System angelernt, basierend auf gemessenen Durchflüssen und/oder Drücken der *m* Sensoren, die nun als erste Sensoren fungieren, die Drücke der an zweiten Orten fungierenden *n* zweiten Sensoren vorauszusagen. Damit ist die Anlernphase abgeschlossen und es folgt die Nutzungsphase. Hier werden zunächst die Drücke an den *m* Orten der *m* zweiten Sensoren vorhergesagt. Anschließend werden die Rollen getauscht, d.h. die *n* vormals ersten Sensoren fungieren nun als zweite Sensoren und die Drücke werden an den *n* Orten der nun *n* zweiten Sensoren vorhergesagt.

Ein Vorteil dieses Verfahrens ist, dass an mehr Orten des Versorgungsnetzes die jeweiligen Drücke vorhergesagt werden können. Das Versorgungsnetz kann, abgesehen von den erwähnten *n* + *m* Sensoren, weitere Sensoren aufweisen, die in beiden Anlernphasen als erste Sensoren fungieren und das selbstlernende System dadurch robuster machen.

Die Erfindung betrifft nicht nur ein Verfahren zur Druckregelung in einem Versorgungsnetz, sondern betrifft auch eine entsprechende Vorrichtung. Im Einzelnen betrifft die Erfindung eine Vorrichtung zur Druckregelung in einem Versorgungsnetz, wobei das Versorgungsnetz dafür geeignet ist, Verbraucher mit einem Fluid zu versorgen. Das Versorgungsnetz weist erste Sensoren zur Messung der Durchflüsse und/oder der Drücke des Fluids an ersten Orten im Versorgungsnetz sowie eine Pumpe zum Pumpen des Fluids oder ein Ventil zum Steuern eines Flusses des Fluids auf. Die Vorrichtung zur Druckregelung umfasst die folgenden Komponenten:
- ein selbstlernendes System, das dafür angelernt wurde, den Druck an einem vorgegebenen Ort im Versorgungsnetz vorherzusagen,
- eine erste Erfassungseinheit zur Erfassung der von den ersten Sensoren gemessenen Durchflüsse bzw. Drücke des Fluids an den ersten Orten im Versorgungsnetz,
- eine Vorhersageeinheit zur Vorhersage des Drucks an dem zweiten Ort mittels des angelernten Systems basierend auf den von der ersten Erfassungseinheit erfassten Durchflüssen bzw. Drücken an den ersten Orten, und
- eine Ansteuerungseinheit zur Ansteuerung der Pumpe bzw. des Ventils.

Spezielle Ausbildungen und Variationen der Erfindung, die im Zusammenhang mit dem Verfahren zur Druckregelung beschrieben wurden, können entsprechend auf die genannte Vorrichtung übertragen werden.

Schließlich betrifft die Erfindung auch eine Anordnung, die die folgenden Komponenten aufweist:
- ein Versorgungsnetz, das dafür geeignet ist, Verbraucher mit einem Fluid zu versorgen, und erste Sensoren zur Messung der Durchflüsse und/oder der Drücke des Fluids an ersten Orten im Versorgungsnetz sowie eine Pumpe zum Pumpen des Fluids oder ein Ventil zum Steuern eines Flusses des Fluids, und
- eine Vorrichtung zur Druckregelung in dem Versorgungsnetz wie oben genannt.

Nachfolgend wird die Erfindung anhand von Ausführungsbeispielen unter Bezugnahme auf die angehängten Zeichnungen beschrieben, in der
- Fig. 1: ein Versorgungsnetz, das mit mehreren unterschiedlichen Verbrauchern verbunden ist,
- Fig. 2: ein erstes Ausführungsbeispiel einer Vorrichtung zur Druckregelung in einem Versorgungsnetz, und
- Fig. 3: ein zweites Ausführungsbeispiel einer Vorrichtung zur Druckregelung in einem Versorgungsnetz
darstellt.

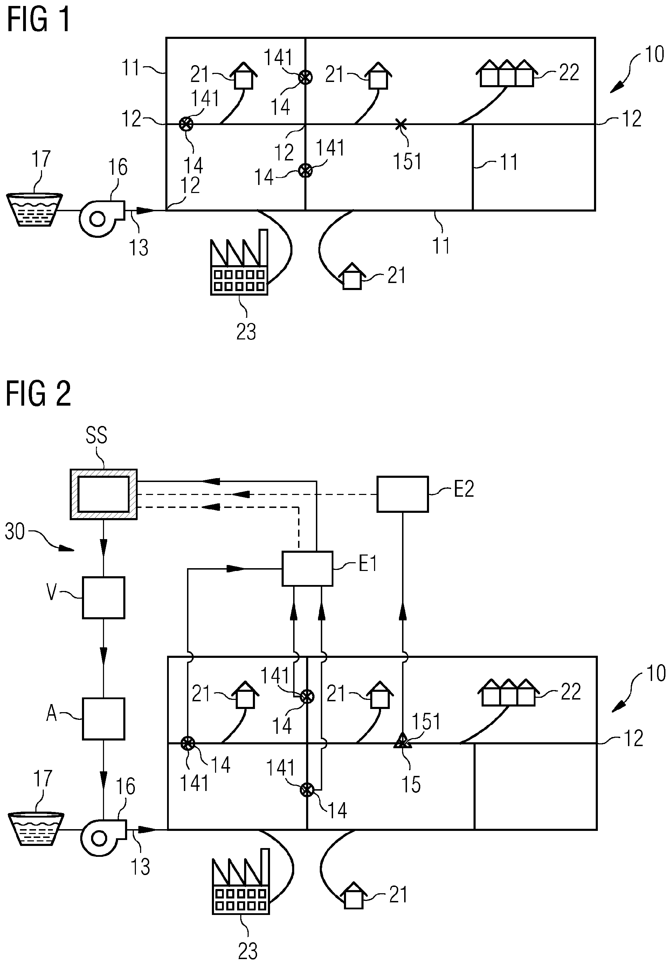

Die Fig. 1 illustriert beispielhaft und schematisch ein Versorgungsnetz 10 zur Versorgung einer Reihe von Verbrauchern mit Trinkwasser. Es handelt sich also um ein Trinkwasserversorgungsnetz. Selbstverständlich ist die Erfindung nicht auf Trinkwasserversorgungsnetze beschränkt, sondern ist auf andere Arten von Versorgungsnetzen ebenfalls anwendbar.

In der Fig. 1 ist ein Messbezirk, im Fachjargon zumeist "District Metering Area (DMA)" genannt, gezeigt, das Teil eines übergeordneten Trinkwasserversorgungsnetzes ist. Der gezeigte Messbezirk kann auch als Druckzone *(englisch: pressure management zone, PMZ)* bezeichnet werden, da in dieser Zone mittels der vorliegenden Erfindung der Druck in vorteilhafter Weise geregelt werden soll. Das in Fig. 1 gezeigte Versorgungsnetz 10 weist nur einen einzigen Zufluss 13 und keine Abflüsse auf. Das Versorgungsnetz 10 umfasst eine Anzahl von Rohren 11, wobei sich an mehreren Knoten 12 des Versorgungsnetzes 10 jeweils drei oder vier Rohre 11 treffen. Zur besseren Anschaulichkeit sind in Fig. 1 nicht alle vorhandenen Rohre 11 und Knoten 12 mit Bezugszeichen referenziert.

Im Zufluss 13 befindet sich eine Pumpe 16, die das Wasser aus einem Wasserreservoir 17 in das Versorgungsnetz 10 pumpt. Alternativ kann statt der Pumpe auch ein Ventil vorgesehen sein, das den Zufluss des Wassers in das Versorgungsnetz 10 steuert. Ein Ventil statt einer Pumpe kann beispielsweise dann ausreichend sein, wenn das Wasserreservoir 17 derart hoch relativ zu den an das Versorgungsnetz 10 angeschlossenen Verbrauchern gelegen ist, dass das Wasser mit so viel Druck durch den Zufluss 13 fließt, dass der Zufluss nur reguliert, das Wasser aber nicht mehr in das Versorgungsnetz 10 gepumpt werden muss.

Fig. 1 zeigt exemplarisch auch einige Verbraucher, die an das Trinkwasserversorgungsnetz 10 angeschlossen sind. Die Verbraucher sind in verschiedene Kategorien eingeteilt; in Fig. 1 sind beispielhaft mehrere Einfamilienhäuser 21, ein Mehrfamilienhaus 22 und eine Fabrik 23 gezeigt. In der Realität sind gewöhnlicherweise mindestens mehrere Dutzende, oftmals mehrere Hunderte und manches Mal mehrere Tausende Verbraucher in einer DMA an ein Versorgungsnetz angeschlossen. Zur besseren Anschaulichkeit sind in Fig. 1 beispielhaft nur sehr wenige an das Versorgungsnetz 10 angeschlossene Verbraucher gezeigt.

Es ist in Fig. 1 also die Topologie des Versorgungsnetzes 10, insbesondere die Anzahl und Verzweigungen der Rohre 11, sowie die Anzahl und Art der an das Versorgungsnetz 10 angeschlossenen Verbraucher zur verbesserten Veranschaulichung der Erfindung stark vereinfacht dargestellt.

Das gezeigte Versorgungsnetz 10 weist keine (expliziten) Abflüsse auf. Dennoch findet mittels der Verbraucher ein Abfluss von Trinkwasser aus dem Versorgungsnetz 10 statt. Die exakten jeweiligen Verbräuche der Verbraucher sind jedoch aus praktischen und datenschutzrechtlichen Gründen nicht bekannt.

Das Versorgungsnetz 10 weist ferner drei erste Sensoren 14 auf. Diese ersten Sensoren 14 sind als Durchfluss- oder Druckmesser ausgestaltet und können den Durchfluss bzw. den Druck des Trinkwassers durch die Rohre 11 an den jeweiligen Orten im Versorgungsnetz 10, an denen sich die ersten Sensoren 14 befinden, messen. Die Orte, an denen sich die ersten Sensoren 14 befinden und für die der jeweilige Durchfluss bzw. Druck gemessen wird, werden als erste Orte 141 bezeichnet .

Die der Erfindung zugrunde liegende Aufgabe besteht nun darin, während des Betriebs des Versorgungsnetzes 10 den Druck im Versorgungsnetz 10 optimal zu regulieren. Hierbei spielt die korrekte Vorhersage des momentanen Drucks an einem zweiten Ort 151 im Versorgungsnetz 10 eine wichtige Rolle.

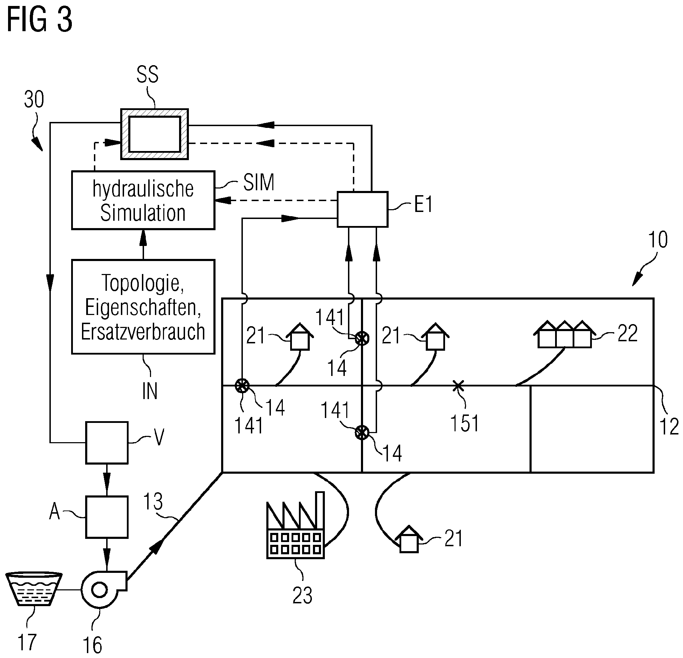

Hierfür bedient sich die Erfindung einer entsprechenden Vorrichtung 30. Ein erstes Ausführungsbeispiel einer solchen Vorrichtung 30 zur Druckregelung in einem Versorgungsnetz 10 zeigt die Fig. 2. Demgegenüber zeigt die Fig. 3 ein leicht abgewandeltes Ausführungsbeispiel einer solchen Vorrichtung 30. Die beiden Ausführungsbeispiele unterscheiden sich im Wesentlichen in der Verwendung eines unterschiedlichen Zielwerts während des Anlernens des selbstlernenden Systems SS.

Zunächst zeigt die Fig. 2 dasselbe Versorgungsnetz 10 wie dasjenige in Fig. 1. Zur Vermeidung von Wiederholungen wird für die Beschreibung des Versorgungsnetzes 10 und der daran angeschlossenen Verbraucher auf die Fig. 1 verwiesen.

Die Fig. 2 zeigt außer dem Versorgungsnetz 10 und den daran angeschlossenen Verbrauchern auch eine Vorrichtung 30 zur Druckregelung des Trinkwassers in dem Versorgungsnetz 10. Hierfür sind die drei ersten Sensoren 14 an eine erste Erfassungseinheit E1 angeschlossen. Die erste Erfassungseinheit E1 ist dazu ausgestaltet, die von den ersten Sensoren 14 an den ersten Orten 141 gemessenen Durchflüsse und/oder Drücke zu erfassen und weiterzuleiten. Des Weiteren zeigt die Fig. 2 eine zweite Erfassungseinheit E2. Diese ist, analog zur ersten Erfassungseinheit E1, dazu ausgestaltet, den von einem zweiten Sensor 15 am zweiten Ort 151 im Versorgungsnetz 10 gemessen Durchfluss und/oder Druck zu erfassen und, sobald im Prozess erfordert, an eine entsprechende Stelle weiterzuleiten.

Während der Anlernphase ist das selbstlernende System SS im in der Fig. 2 gezeigten ersten Ausführungsbeispiel mit der ersten Erfassungseinheit E1 und der zweiten Erfassungseinheit E2 verbunden. Diese Verbindungen sind in Fig. 1 als gestrichelte Linien kenntlich gemacht. Die erste Erfassungseinheit E1 liefert die Eingangsdaten, nämlich die gemessenen Durchflüsse und/oder Drücke an den ersten Orten 141 im Versorgungsnetz 10. Darauf basierend ist es die Aufgabe des selbstlernenden Systems SS, einen (erwarteten) Druck an einem anderen Ort im Versorgungsnetz vorherzusagen bzw. zu bestimmen. Dieser andere Ort ist der bereits erwähnte zweite Ort 151, nämlich der Ort, an dem sich der zweite Sensor 15 befindet. Zu Beginn der Anlernphase wird der von dem selbstlernenden System SS bestimmte Druck am zweiten Ort 151 in der Regel noch nicht mit dem tatsächlichen Druck an diesem Ort übereinstimmen. Um das selbstlernende System SS zu trainieren, also zu verbessern, wird das Konzept des überwachten Lernens *(englisch: supervised learning)* angewendet. Hierfür wird der von dem selbstlernenden System SS bestimmte Druck mit einem Zielwert verglichen. Dieser Zielwert ist im vorliegenden Ausführungsbeispiel der tatsächlich am zweiten Ort gemessener Durchfluss und/oder Druck. Die Messung des Durchflusses und/oder Drucks an diesem Ort erfolgt vorteilhafterweise mit dem zweiten Sensor 15.

Wird von dem zweiten Sensor 15 ein Durchfluss gemessen, wird dieser in einen Druck umgerechnet. Wird von dem zweiten Sensor 15 ein Druck gemessen, kann dieser gemessene Druck direkt weiterverwendet werden.

Der von dem zweiten Sensor 15 berechnete bzw. gemessene Druck wird von der zweiten Erfassungseinheit E2 erfasst und an das selbstlernende System SS weitergeleitet. Anschließend wird in dem selbstlernenden System der von dem zweiten Sensor 15 gemessene oder berechnete Druck mit dem zuvor bestimmten/ vorhergesagten Wert verglichen. Ist die Übereinstimmung zu gering - was, wie oben angedeutet, insbesondere zu Beginn des Trainings die Regel sein dürfte - werden neue Durchfluss- und oder Druckwerte von den ersten Sensoren 14 gemessen. Für diese neuen Durchflüsse und/oder Drücke versucht das selbstlernende System SS möglichst zutreffend den tatsächlichen Druck am zweiten Ort 151 zu vorherzusagen.

Es ist vorteilhaft, wenn sich die von den ersten Sensoren 14 gemessenen Werte im zweiten Durchlauf von den gemessenen Werten im ersten Durchlauf unterscheiden. Sind die gemessenen Werte an den ersten Orten 141 nämlich sehr ähnlich oder gar identisch, wird das selbstlernende System SS beim zweiten Durchlauf basierend auf dem Gelernten aus dem ersten Durchlauf den Druck am zweiten Ort 151 ohne große Probleme korrekt vorhersagen. Im Betrieb muss das selbstlernende System SS aber imstande sein, für unterschiedlichste Durchflüsse und/oder Drücke an den ersten Orten 141 eine korrekte Vorhersage für den Druck am zweiten 151 Ort treffen zu können.

Die beschriebenen Schritte eines Durchlaufs (oder: Iteration) sind also: Messen der Durchflüsse und/oder Drücke an den ersten Orten 141; Vorhersagen bzw. Bestimmen des Drucks an dem zweiten Ort 151; und Vergleich des vorhergesagten Drucks mit dem tatsächlichen gemessenen Druck.

Es werden so viele Durchläufe durchgeführt, bis das vorgegebene Abbruchkriterium erfüllt ist. Das Abbruchkriterium kann zum Beispiel darin bestehen, dass für zehn nacheinander erfolgte Durchläufe der Unterschied zwischen dem von dem selbstlernenden System SS bestimmten Druck am zweiten Ort 151 und dem tatsächlich vorliegenden Druck (bestimmt basierend auf der Messung des am zweiten Ort 151 befindlichen zweiten Sensors 15) jeweils kleiner als 5%, insbesondere kleiner als 2%, bevorzugt kleiner als 1%, sein muss.

Es ist vorteilhaft, dieses beispielhaft genannte Abbruchkriterium noch mit einer weiteren Bedingung zu verknüpfen, nämlich z.B. dass für die zehn nacheinander erfolgten Durchläufe die an den ersten Orten 141 gemessenen Durchflüsse und/oder Drücke einen breiten Wertebereich abdecken. Dies bedeutet, dass z.B. zwischen dem kleinsten gemessenen Druck jedes ersten Sensors 14 und dem größten gemessenen Druck desselben ersten Sensors 14 ein Unterschied von mindestens 100% zu liegen hat. Es sind natürlich auch komplexere Vorgaben denkbar, um eine breite Abdeckung der ersten Durchflüsse und/oder Drücke in verschiedenen Durchläufen zu gewährleisten.

Nach der Anlernphase folgt der Betrieb, auch als Nutzphase bezeichnet, des Versorgungsnetzes 10. Hierbei werden wiederum die Durchflüsse und/oder Drücke an den ersten Orten 141 im Versorgungsnetz 10 gemessen. Dies geschieht mittels der ersten Sensoren 14. Die gemessenen Werte werden von der ersten Erfassungseinheit E1 erfasst und an das selbstlernende System SS, das im Rahmen dieser Patentanmeldung nach Beendigung der Anlernphase auch als "angelerntes System" SS bezeichnet wird, weitergeleitet. Die Weiterleitung der von der ersten Erfassungseinheit E1 erfassten Durchflüsse und/oder Drücke an das angelernte System SS ist in Fig. 1 mit einer durchgezogenen Linie - zur Unterscheidung der gestrichelten Verbindung während der Anlernphase - kenntlich gemacht.

Das angelernte System SS trifft nun, basierend auf den gemessenen Durchflüssen und/oder Drücken an den ersten Orten 141, eine Vorhersage bezüglich des erwarteten Drucks am zweiten Ort 151 im Versorgungsnetz 10. Diese Vorhersage wird von einer Vorhersageeinheit V getroffen.

Basierend auf dem vorhergesagten Druck am zweiten Ort 151 im Versorgungsnetz 10 wird anschließend die Pumpe 16 entsprechend gesteuert. Stellt sich beispielsweise heraus, dass der Druck am zweiten Ort 151 höher ist, als er für die Versorgung der relevanten Verbraucher mit Trinkwasser zu sein hat, reduziert die Pumpe 16 ihre Pumpleistung. Dadurch wird der Druck im Versorgungsnetz 10 und insbesondere auch am zweiten Ort 151 reduziert, wodurch der Verschleiß der Komponenten des Versorgungsnetz 10, der Energieverbrauch der Pumpe 16 und etwaige Hintergrundleckagen im Versorgungsnetz 10 reduziert werden. Stellt sich andererseits beispielsweise heraus, dass der Druck am zweiten Ort 151 niedriger ist, als für in der Umgebung des zweiten Orts 151 platzierte Feuerhydranten erforderlich ist, erhöht die Pumpe 16 ihre Pumpleistung. Dadurch wird am zweiten Ort 151 ein Wasserdruck sichergestellt, der im Fall, dass Wasser an einem in dieser Umgebung platzierten Feuerhydranten Wasser entnommen werden muss, für die damit verbundenen Anforderungen hoch genug ist.

Werden die jeweiligen Drücke für mehrere zweite Orte 151 vorhergesagt, kann der Druck im Versorgungsnetz 10 im Prinzip noch optimaler geregelt werden.

Die Fig. 3 zeigt ein zweites Ausführungsbeispiel einer Vorrichtung 30 zur Regulierung des Drucks in einem Versorgungsnetz 10. Sie unterscheidet sich im Anlernen des selbstlernenden System SS von der Vorrichtung 30 des ersten Ausführungsbeispiels.

Konkret werden im zweiten Ausführungsbeispiel während der Anlernphase zunächst nur die gemessenen Durchflüsse und/oder Drücke an den ersten Orten 141 von der ersten Erfassungseinheit E1 an das selbstlernende System SS weitergeleitet. Diese sagt wiederum bzw. bestimmt einen erwarteten Druck an dem zweiten Ort 151 im Versorgungsnetz 10. Dieser erwartete Druck wird im Schritt iii) des Verfahrens allerdings nicht direkt mit dem am zweiten Ort 151 bestimmten Druck verglichen, sondern mit einem simulierten Druck am zweiten Ort 151. Es ist von großer Bedeutung für ein erfolgreiches Anlernen des selbstlernenden Systems SS, dass der simulierte Durchfluss am zweiten Ort 151 vertrauenswürdig, also korrekt, ist, da er den Zielwert darstellt, mit dem das selbstlernende System SS angelernt wird. Stimmt der Zielwert nicht mit der Realität überein, kann logischerweise auch das angelernte System SS die Realität nicht korrekt abbilden bzw. voraussagen.

Die Simulation SIM ist im vorliegenden Fall eines Trinkwasserversorgungsnetzes eine hydraulische Simulation. Hierfür werden auf Grundlage der Fluidmechanik die Drücke und weitere Parameter (z.B. Durchflüsse, Fließgeschwindigkeiten, ...) im Versorgungsnetz analytisch oder modellbasiert simuliert. Die Herausforderung einer hydraulischen Simulation SIM besteht in der Regel darin, dass sie bereits für topologisch relativ einfache Versorgungsnetze schnell recht komplex wird. Hinzu kommt, dass in der Regel eine Reihe von Eingabedaten IN für die hydraulische Simulation SIM benötigt werden. Diese umfassen unter anderem: Die Topologie, d.h. die Anordnung und der Verlauf der Rohre 11 und Knoten 12; der Durchfluss und/oder Druck am Zufluss 13 in das Versorgungsnetz 10; die Anordnung und Art der Verbraucher; Ersatzverbrauchsprofile der einzelnen Verbrauchertypen, d.h. typische (oder: repräsentative) Verbrauchsprofile für die einzelnen Verbrauchertype; Eigenschaften der Rohre, wie z.B. Reibungskoeffizienten oder Innendurchmesser.

Basierend auf den gemessenen Durchflüssen und/oder Drücken an den ersten Orten 141 und den zur Verfügung stehenden Eingangsdaten IN simuliert die hydraulische Simulation SIM den erwarteten Druck an dem zweiten Ort 151 und leitet diesen dem selbstlernenden System SS zu. Der simulierte Druck am zweiten Ort 151 fungiert als Zielwert für das selbstlernende System SS und als Maßstab, wie gut das selbstlernende System SS bereits trainiert ist.

Die Nutzungsphase, oder Betrieb des Versorgungsnetzes verläuft im zweiten Ausführungsbeispiel identisch zum ersten Ausführungsbeispiel, weswegen auf die Beschreibung derselben hierfür nach oben verwiesen wird.

Zusammenfassend ist festzustellen, dass die Erfindung ein Verfahren, eine Vorrichtung und eine Anordnung bereitstellt, womit auf einfache Art und Weise mithilfe eines selbstlernenden Systems der Druck in einem Versorgungsnetz reguliert werden kann, wobei an manchen Orten im Versorgungsnetz der Druck nicht gemessen, sondern lediglich mittels des angelernten Systems vorhergesagt wird.

## Patentansprüche

1. Verfahren zur Druckregelung in einem Versorgungsnetz (10), wobei das Versorgungsnetz (10) dafür geeignet ist, Verbraucher mit einem Fluid zu versorgen, und erste Sensoren (14) zur Messung der Durchflüsse und/oder der Drücke des Fluids an ersten Orten (141) im Versorgungsnetz (10) sowie eine Pumpe (16) zum Pumpen des Fluids oder ein Ventil zum Steuern eines Flusses des Fluids aufweist,
und wobei das Verfahren zur Druckregelung die folgenden Schritte aufweist:
a) Messen der Durchflüsse und/oder Drücke des Fluids an den ersten Orten (141) im Versorgungsnetz (10) mittels der ersten Sensoren (14),
b) Vorhersagen des Drucks an dem zweiten Ort (151) im Versorgungsnetz (10) mittels eines selbstlernenden Systems (SS) basierend auf den in Schritt a) gemessenen Durchflüssen bzw. Drücken, wobei das selbstlernende System (SS) dafür angelernt wurde, den Druck an einem vorgegebenen Ort im Versorgungsnetz (10) vorherzusagen, und
c) Ansteuern der Pumpe (16) bzw. des Ventils basierend zumindest auch auf dem von dem angelernten System (SS) vorhergesagten Druck am zweiten Ort (151).

2. Verfahren nach Anspruch 1,
wobei das selbstlernende System (SS) mittels der folgenden Schritte angelernt wurde:
i) Messen der Durchflüsse und/oder Drücke des Fluids an den ersten Orten (141) im Versorgungsnetz (10) mittels der ersten Sensoren (14),
ii) Bestimmen des Drucks an dem zweiten Ort (151) mittels des selbstlernenden Systems (SS) basierend auf den in Schritt i) gemessenen Durchflüssen bzw. Drücken an den ersten Orten (141),
iii) Ermitteln der Differenz zwischen dem in Schritt ii) bestimmten Druck und einem Zielwert,
iv) Anpassen des selbstlernenden Systems (SS) unter Berücksichtigung der in Schritt iii) ermittelten Differenz, und
v) Wiederholen der Schritte i) bis iv) bis zu einem vorgegebenen Abbruchkriterium.

3. Verfahren nach Anspruch 2,
wobei das Anlernen des selbstlernenden Systems (SS) gemäß der Schritte i) bis v) sowie die Druckregelung gemäß der Schritte a) bis c) für mehrere unterschiedliche zweite Orte (151) durchgeführt werden.

4. Verfahren nach Anspruch 3,
wobei
- die Schritte i) bis v) wiederholt werden unter der Maßgabe, dass anstatt der ersten Sensoren (14) an den ersten Orten (141) die zweiten Sensoren (15) an den zweiten Orten (151) und umgekehrt verwendet werden, und
- die Schritte a) bis c) wiederholt werden unter der Maßgabe, dass anstatt der ersten Sensoren (14) an den ersten Orten (141) die zweiten Sensoren (15) an den zweiten Orten (151) und umgekehrt verwendet werden.

5. Verfahren nach einem der Ansprüche 2 bis 4,
wobei das Abbruchkriterium darin besteht, dass eine durchschnittliche Differenz zwischen dem in Schritt ii) bestimmten Druck an dem zweiten Ort (151) und dem Zielwert einen vorgegebenen Schwellenwert unterschreitet.

6. Verfahren nach einem der Ansprüche 2 bis 5,
wobei der Zielwert auf dem von einem zweiten Sensor (15) tatsächlich gemessenen Durchfluss und/oder Druck des Fluids am zweiten Ort (151) basiert.

7. Verfahren nach Anspruch 6,
wobei der zweite Sensor (15) nach dem Anlernen des selbstlernenden Systems (SS) vom Versorgungsnetz (10) entfernt wird.

8. Verfahren nach einem der Ansprüche 1 bis 5,
wobei der Zielwert mittels einer Simulation (SIM) bestimmt wurde.

9. Verfahren nach Anspruch 8,
wobei die Simulation (SIM) als Eingangsdaten (IN) die Topologie des Versorgungsnetzes (10), die Orte und Art der Verbraucher sowie für jeden Verbraucher ein Ersatzverbrauchsprofil verwendet.

10. Verfahren nach Anspruch 9,
wobei die Eingangsdaten (IN) vor der Bestimmung des Zielwerts mittels einer Reihenentwicklung, insbesondere einer Hauptkomponentenanalyse, reduziert werden.

11. Verfahren nach einem der vorhergehenden Ansprüche,
wobei das Verfahren auch die Platzierung der ersten Sensoren (14) an den ersten Orten (141) im Versorgungsnetz (10) umfasst, wobei insbesondere die ersten Sensoren (14) so platziert werden, dass ihre Messwerte nicht miteinander korrelieren.

12. Verfahren nach einem der vorhergehenden Ansprüche,
wobei das Fluid Wasser ist und es sich bei dem Versorgungsnetz (10) um ein Trinkwasserversorgungs- oder Abwassernetz handelt.

13. Verfahren nach einem der Ansprüche 1 bis 11,
wobei das Fluid ein Gas ist und es sich bei dem Versorgungsnetz (10) um ein Gas- oder Fernwärmeversorgungsnetz handelt.

14. Vorrichtung (30) zur Druckregelung in einem Versorgungsnetz (10), wobei das Versorgungsnetz (10) dafür geeignet ist, Verbraucher mit einem Fluid zu versorgen, und erste Sensoren (14) zur Messung der Durchflüsse und/oder der Drücke des Fluids an ersten Orten (141) im Versorgungsnetz (10) sowie eine Pumpe (16) zum Pumpen des Fluids oder ein Ventil zum Steuern eines Flusses des Fluids aufweist, wobei die Vorrichtung (30) zur Druckregelung die folgenden Komponenten aufweist:
- ein selbstlernendes System (SS), das dafür angelernt wurde, den Druck an einem vorgegebenen Ort im Versorgungsnetz (10) vorherzusagen,
- eine erste Erfassungseinheit (E1) zur Erfassung der von den ersten Sensoren (14) gemessenen Durchflüsse bzw. Drücke des Fluids an den ersten Orten (141) im Versorgungsnetz (10),
- eine Vorhersageeinheit (V) zur Vorhersage des Drucks an dem zweiten Ort (151) mittels des angelernten Systems (SS) basierend auf den von der ersten Erfassungseinheit (E1) erfassten Durchflüssen bzw. Drücken an den ersten Orten (141), und
- eine Ansteuerungseinheit (A) zur Ansteuerung der Pumpe (16) bzw. des Ventils.

15. Anordnung umfassend
- ein Versorgungsnetz (10), das dafür geeignet ist, Verbraucher mit einem Fluid zu versorgen, und erste Sensoren (14) zur Messung der Durchflüsse und/oder der Drücke des Fluids an ersten Orten (141) im Versorgungsnetz (10) sowie eine Pumpe (16) zum Pumpen des Fluids oder ein Ventil zum Steuern eines Flusses des Fluids aufweist, und
- eine Vorrichtung (30) zur Druckregelung in dem Versorgungsnetz (10) gemäß Anspruch 14.
